# EUROPEAN PATENT APPLICATION

(11) **EP 2 765 282 A1**
(43) Date of publication of application: **13.08.2014**
(21) Application number: 13154714.3
(22) Date of filing: 08.02.2013
(51) Int. Cl.: F01K 27/02, F02C 7/047, F02C 7/057, F02C 7/143, H02K 9/10

(54) **Power generating unit and method for operating such a power generating unit**

(71) Applicant: Alstom Technology Ltd, 5400 Baden (CH)
(72) Inventor: Scheu, Martin, 5400 Baden (CH); Reyser, Charly, 79790 Kuessaberg (DE)

(57) **Abstract**

A power generating unit (10) comprises a gas turbine (11') with an air intake section (12), a compressor (13), at least one combustor (14, 16) and at least one turbine (15, 17), and further comprises a gas-cooled generator (18), being driven by said gas turbine (11) and having a generator cooling system (20) comprising at least one cooler, through which cooling water flows, and which removes heat from said generator.

A more flexible operation of the unit can be achieved by connecting said generator cooling system (20) to an air intake heat exchanger (30) arranged within said air intake section (12) of said gas turbine (11) in order to transfer heat from said cooling water flowing through said generator cooling system (20), to the air flowing through said air intake section (12).

## Description

### BACKGROUND OF THE INVENTION

The present invention relates to the generation of electric power by means of a gas turbine and generator. It refers to a power generating unit according to the preamble of claim 1. It further refers to a method for operating such a power generating unit.

### PRIOR ART

A generators capability (i.e. its maximum possible output) usually is reduced at hot ambient temperatures, since temperatures of the cold water entering the generator cooler increase with increasing ambient temperatures, particularly when cooling water is re-cooled in a cooling water cooler against ambient air (as opposed to water).

Usually, the reduced capability matches the reduced power output of a gas turbine, which drives the generator in a power generating unit, at higher ambient temperatures. However, when gas turbine power output is augmented with evaporative cooling or fogging, and possibly further augmented by additional water injection, the generator may not be able to convert this augmented power within its specification limits (typically isolation class E).

On the other hand, gas turbines operating at cold ambient temperatures usually need a mechanism to prevent icing of the compressor inlet and front stages.

To solve the problem related to the gas turbine power augmentation a generator with higher capability could be used: Usually this means a bigger and more expensive generator for this specific operation window. The cost increases disproportionally, if a technology change from air cooled generators to hydrogen cooled generators becomes necessary.

Alternatively, re-cooling could be provided with evaporative re-coolers outside the air intake system.

Alternatively, a mechanical chilling device (heat pump) could be used to re-cool the generator cold water.

However, above described solutions are complex and/or costly and require significant additional space.

To solve the problem related to icing of the gas turbine, bleed air from the compressor could be used with the following disadvantages: It reduces gas turbine efficiency, and requires high temperature and pressure class piping.

Alternatively, a heat exchanger may be used. Typically, low temperature steam from a water steam cycle is used for the purpose. Hence, this would be limited to combined cycle power plants (CCPP) and hence would not be feasible for simple cycle plants.

Document US 6,112,544 discloses a method for optimizing the cooling efficiency of a generator cooling system for a generator used for electric power generation in a power station. The generator has a generator cooler which is arranged, together with further coolers, in a closed intermediate cooling circuit which transfers heat to a main cooling water system via at least one intermediate cooler. The method includes providing means for increasing the mean driving temperature difference between the media flowing through the generator cooler in the intermediate cooling circuit to improve the transmission of heat from the generator cooler to the main cooling water system. The cooling system is not related to a gas turbine.

Document US 2012/0216546 A1 discloses a method and apparatus for the operation of a gas turbine unit with an evaporative intake air cooling system in the intake air pathway, wherein the return water flow of the evaporative intake air cooling system is used for the cooling of components of the gas turbine unit and/or of a generator coupled to the gas turbine unit and/or of another element coupled to the gas turbine unit, and a gas turbine unit adapted to be operated using this method. A connection between gas turbine and generator cooling is established only via the use of the return water flow.

Document WO 03/048545 A1 discloses a gas turbine unit as well as a method for operating a gas turbine with high-pressure turbine and a low-pressure turbine unit. In this unit a very quick and at the same time easily controllable augmentation or reduction of the shaft power of the gas turbine unit can be achieved by providing at least one liquid droplet injection device on the upstream side of said compressor for injecting liquid into the stream of intake air in order to increase the shaft power generated by the gas turbine unit. The amount of water mass flow corresponding to the desired increase or decrease of shaft power output of the gas turbine unit is added or reduced in the form of liquid droplets in a substantially stepless manner and immediately within a time interval that is determined by the design characteristics of the liquid droplet injection device. A relation to a generator is not disclosed.

### SUMMARY OF THE INVENTION

It is an object of the present invention to provide a power generating unit according to the preamble of claim 1, which synchronizes the power and cooling requirements of gas turbine and generator in a simple and most effective way.

It is another object of the present invention to disclose a method for operating such a power generating unit.

These and other objects are obtained by a power generating unit according to claim 1 and a method according to claim 14.

The power generating unit according to the present invention comprises a gas turbine with an air intake section, a compressor, at least one combustor and at least one turbine, and further comprises a gas-cooled generator, being driven by said gas turbine and having a generator cooling system comprising at least one cooler, through which cooling water flows, and which removes heat from said generator

The unit is characterized in that said generator cooling system is connected to an air intake heat exchanger arranged within said air intake section of said gas turbine in order to transfer heat from said cooling water flowing through said generator cooling system, to the air flowing through said air intake section.

According to an embodiment of the invention said air intake section of said gas turbine comprises a filter at the entrance of said air intake section, and said air intake heat exchanger is arranged downstream of said filter.

Specifically, said air intake section of said gas turbine comprises a silencer downstream of said filter, and said air intake heat exchanger is arranged downstream of said silencer.

More specifically, said air intake section of said gas turbine comprises means for cooling intake air flowing through said air intake section, and said cooling means is arranged between said filter and said silencer.

Even more specifically, said cooling means comprises a droplet injection device for fogging.

Alternatively, said cooling means comprises an evaporative cooler, preferably with a droplet catcher arranged downstream said evaporative cooler.

According to another embodiment of the invention said air intake section of said gas turbine comprises a silencer downstream of said filter, said air intake section of said gas turbine further comprises means for cooling intake air flowing through said air intake section, which cooling means is arranged between said filter and said silencer, and said air intake heat exchanger is arranged between said cooling means and said silencer.

Specifically, said cooling means comprises a droplet injection device for fogging.

Alternatively, said cooling means comprises an evaporative cooler, preferably with a droplet catcher arranged downstream said evaporative cooler.

According to a further embodiment of the invention said generator cooling system comprises a generator cooler and a lube oil cooler, which are connected to a cooling water cooler, and connecting means are provided for selectively connecting said air intake heat exchanger in series with said generator cooler such that cold water flowing to the generator cooler is further cooled by routing it through said intake heat exchanger, or in parallel to said cooling water cooler in order to prevent icing of the compressor inlet and/or front stages of said gas turbine.

Specifically, a first valve is arranged in a feed line of said generator cooler, said air intake heat exchanger is connected with a first feed line to said feed line of said generator cooler upstream of said first valve, and with a first return line to said feed line of said generator cooler downstream of said first valve, and a second and third valve are arranged in said first feed line and first return line.

More specifically, said air intake heat exchanger is connected with a second feed line to a common return line of said generator cooler and said lube oil cooler, and with a second return line to a common feed line of said generator cooler and said lube oil cooler, and a fourth and fifth valve are arranged in said second feed line and second return line.

Even more specifically, a sixth valve is arranged in said common return line or common feed line between said air intake heat exchanger and said cooling water cooler.

The method for operating an inventive power generating unit according to the invention is characterized in that heat is transferred from said generator cooling system to intake air flowing through said air intake section of said gas turbine by means of said air intake heat exchanger.

According to an embodiment of the inventive method said at least one cooler is a generator cooler, and cold water flowing to said generator cooler is further cooled by routing it through said air intake heat exchanger arranged within said air intake section of said gas turbine to inherently synchronize an additional cooling demand with a higher output of said gas turbine when air inlet cooling is activated.

According to another embodiment of the inventive method said air intake heat exchanger is used at low ambient temperature to act as an efficient anti-icing means.

According to a further embodiment of the inventive method said air intake heat exchanger is used for intake air pre-heating in order to control NOx emission of said gas turbine.

### BRIEF DESCRIPTION OF THE DRAWINGS

The present invention is now to be explained more closely by means of different embodiments and with reference to the attached drawings.
- Fig. 1: shows a basic scheme of a power generating unit with a gas turbine with sequential combustion and a generator driven by said gas turbine, and having a generator cooling system (solid lines), which is, according to the invention, connected to a heat exchanger placed in an air intake section of said gas turbine (broken lines);
- Fig. 2: shows an example of a basic generator cooling system with a generator cooler and a lube oil cooler;
- Fig. 3: shows the generator cooling system of Fig. 2 completed with an air intake heat exchanger according to the invention;
- Fig. 4: shows the generator cooling system of Fig. 3 completed with selectable connecting means in a first mode of operation according to the invention;
- Fig. 5: shows the generator cooling system of Fig. 4 in a second mode of operation according to the invention;
- Fig. 6: shows a gas turbine scheme with an air intake section and air intake heat exchanger according to an embodiment of the invention; and
- Fig. 7: shows a gas turbine scheme with an air intake section and air intake heat exchanger according to another embodiment of the invention.

### DETAILED DESCRIPTION OF DIFFERENT EMBODIMENTS OF THE INVENTION

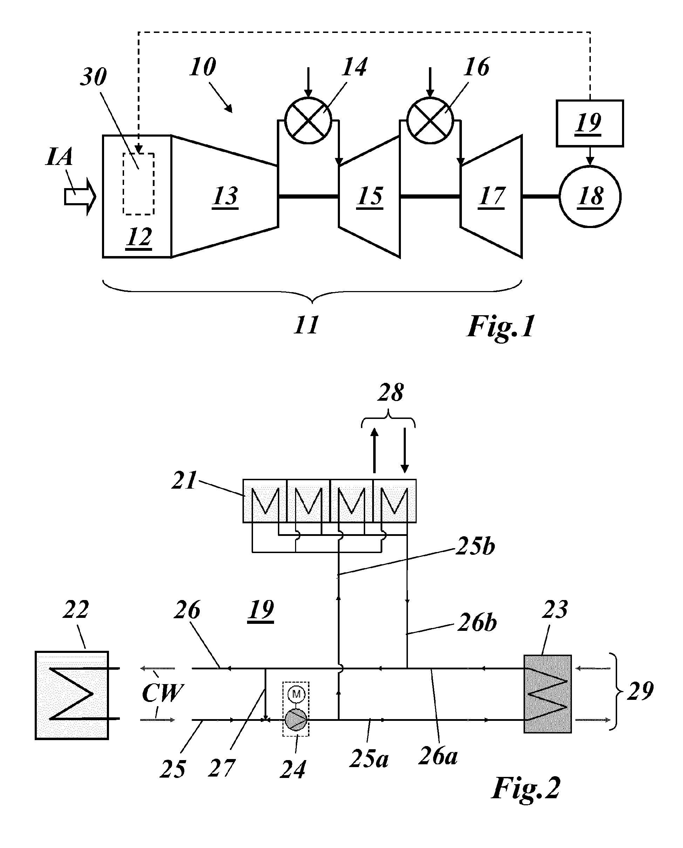

Fig. 1 shows a basic scheme of a power generating unit with a gas turbine with sequential combustion and a generator driven by said gas turbine, and having a generator cooling system (solid lines), which is, according to the invention, connected to a heat exchanger placed in an air intake section of said gas turbine (broken lines).

The power generating unit 10 of Fig. 1 comprises a gas turbine 11 with an air intake section 12, a compressor 13, a first combustor 14, a first (high pressure) turbine 15, a second combustor 16, a second (low pressure) turbine 17 and a gas (air)-cooled generator 18, which is driven by gas turbine 11 and has a generator cooling system 19. Generator cooling system 19 is now connected to an air intake heat exchanger 30 arranged within air intake section 12 of gas turbine 11 in order to transfer heat from cooling water flowing through generator cooling system 19 to the air flowing through air intake section 12 of gas turbine 11.

An exemplary configuration of generator cooling system 19 is shown in Fig. 2. It comprises a generator cooler 21 (having four parallel sub-units in this case) and a lube oil cooler 23. Generator cooler 21 is part of an air circuit 28, thereby receiving warm air (of for example 100°C) from generator 18 and delivering cool air (of for example 48°C) to the generator. The cooling air volume flow within air circuit 28 may be in the order of several m³/s. Lube oil cooler 23 is part of an oil circuit 29, thereby receiving warm oil (of for example 70°C) from the bearings of generator 18 and delivering cooled-down oil (of for example 54°C) to the generator.

Both coolers 21 and 23 are operated with cooling water CW, which is pumped by water pump 24 through feed lines 25a, and 26a and flows back through return lines 26a and 26b. Coolers 21 and 23 are connected in parallel with their cooling water sides and may be both connected to a cooling water cooler 22. In addition, a bypass line 27 may be provided upstream of water pump 24.

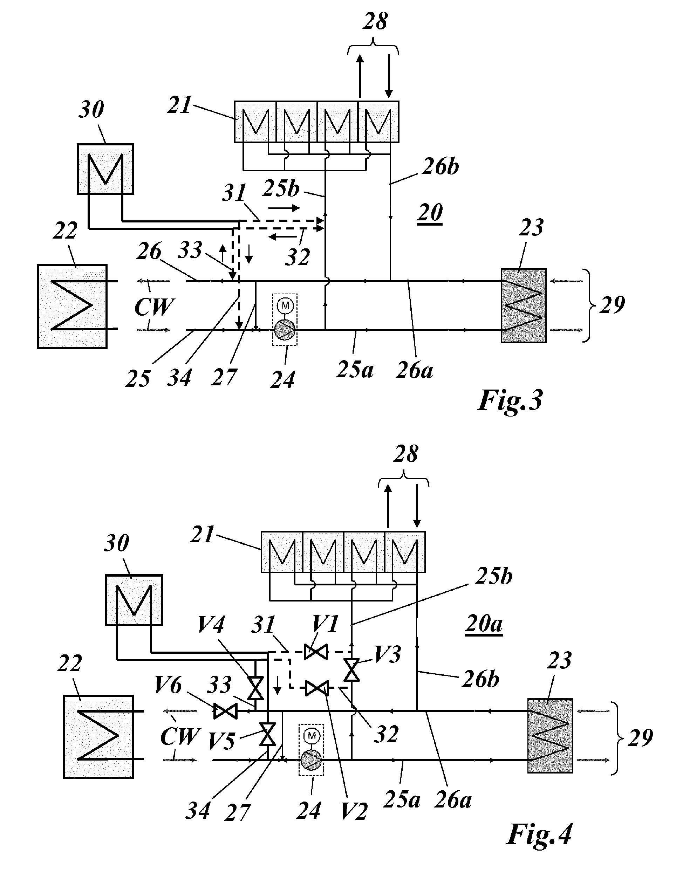

Now, according to the invention, generator cooling system 19 of Fig. 2 is connected to an air intake heat exchanger 30, resulting in modified generator cooling system 20 shown in Fig. 3. Principally, air intake heat exchanger 30 is connected to the generator cooler part of generator cooling system 20 by means of a first feed line 32 and a first return line 31, and to the parallel circuit of both coolers 21 and 23 by means of a second feed line 33 and a second return line 34.

Two cases are possible for the use of air intake heat exchanger 30 in this configuration:
1. Generator and lube oil waste heat are used to prevent icing without sacrificing gas turbine performance. In this case, the air intake heat exchanger 30 is connected by means of lines 33 and 34 to the system so that the sum of generator and lube oil waste heat can be used to heat up the intake air IA of the gas turbine.
2. Cooled-down intake air is used to further cool down the cooling water being fed to generator cooler 21. In this case, the air intake heat exchanger 30 is looped into feed line 25b of generator cooler 21 by means of lines 31 and 32 so that generator cooler 21 receives cooling water, the temperature of which is reduced parallel to the reduction in intake air temperature.

Thus, the same heat exchanging device 30 and medium can be used for both purposes.

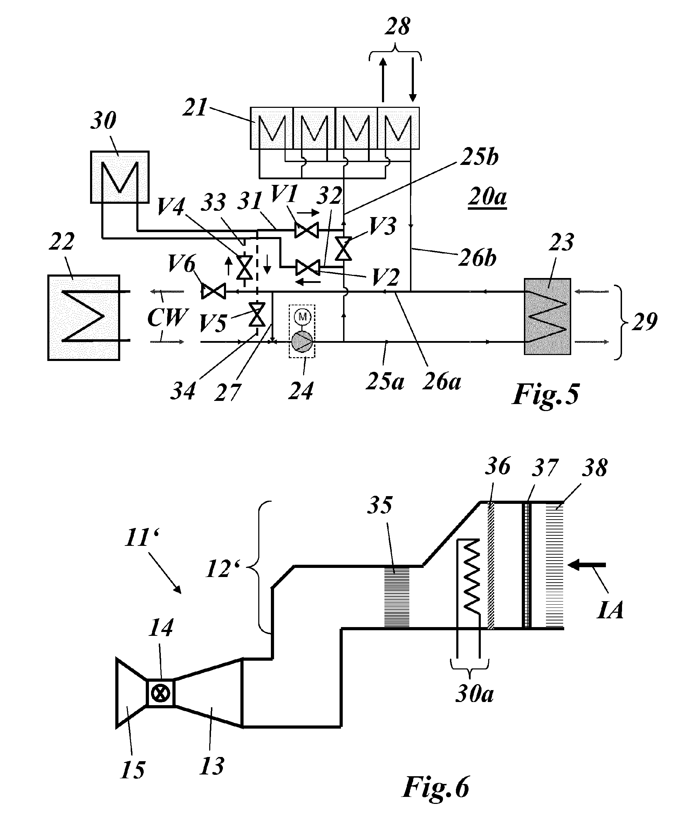

In order to be able to select one of these two operating modes, several valves V1-V6 are arranged in lines 25b, 31-34 and the return line to cooling water cooler 22, as shown in Fig. 4 and 5. A first valve V3 is arranged in feed line 25b of generator cooler 21. Air intake heat exchanger 30 is connected with feed line 32 to feed line 25b of generator cooler 21 upstream of first valve V3, and with return line 31 to feed line 25b of generator cooler 21 downstream of first valve V3. In this example a second and third valve V1, V2 are arranged in feed line 32 and return line 31, respectively.

On the other hand, air intake heat exchanger 30 is connected with feed line 33 to a common return line 26 of generator cooler 21 and lube oil cooler 23, and with a return line 34 to a common feed 25 line of generator cooler 21 and lube oil cooler 23. A fourth and fifth valve V4, V5 are arranged in feed line 33 and return line 34, respectively.

When the ambient temperature is low enough to cause an icing problem, valves V1 and V2 are closed, and valves V4 and V5 are opened (Fig. 4), so that waste heat of both coolers 21 and 23 is used to heat up the intake air at gas turbine 11 by means of air intake heat exchanger 30. Valve V6 may be closed or partly closed, depending on the required heating of the intake air IA. The air pre-heating can be used to keep the intake temperature above a minimum, for example for very low ambient temperatures in Russia, Siberia etc.. For Anti-Icing the heat released by lube oil cooler 23 and generator cooler 21 is sufficient to preheat the intake air by about 10 K.

When additional generator cooling is needed in view of a higher gas turbine output caused by augmentation procedures at air intake section 12, valves V3, V4 and V5 are closed, and valves V1 and V2 are opened (Fig. 5). Then, cold water flowing to generator cooler 21 through feed line 25b, which typically arrives at T_{ambient}+5K from the ordinary re-cooling system 22, is further cooled by routing it through heat exchanger 30 in the air inlet system, which is located behind an air inlet cooling mechanism of the gas turbine air intake system. Accordingly, the demand is inherently synchronized with higher gas turbine output when air inlet cooling is activated. At a hot dry day the generator cooling air will be cooled down by about an additional 10 K (e.g. ambient temperature = 55°C, inlet air temperature after evaporation-cooling about 42°C =>re-cooling by means of air intake heat exchanger 30 cools more than 10°C below a prior art air-water cooler used for cooling the generator cooling water).

Air intake heat exchanger 30 can be arranged in air intake section 12 at different places, depending on the configuration of air intake section 12.

Fig. 6 shows an embodiment with air intake section 12' of gas turbine 11', wherein an air intake heat exchanger 30a is placed upstream of a silencer 35 and downstream of an evaporative cooler 37 with subsequent droplet catcher 36. Furthermore, a filter 38 may be provided at the entrance of air intake duct 12'.

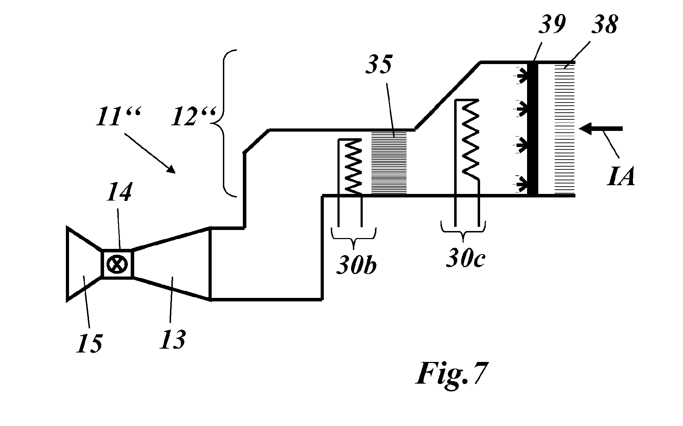

Fig. 7 shows two other embodiments with air intake section 12" of gas turbine 11", wherein either an air intake heat exchanger 30b is placed downstream of or integrated into a silencer 35, or an air intake heat exchanger 30c is placed just downstream of a droplet injection (fogging) device 39.

In general, the power generating unit according to the invention has the following features and advantages:
● The same heat exchanger is used for generator cooling purposes to address problems with power augmentation at the gas turbine and can be used at low ambient temperatures to replace less efficient anti-icing systems.
● The same heat exchanger can be used for air pre-heating at the gas turbine to control NOx emission.
● The heat exchanger for generator-recooling/intake air preheating purposes can be integrated into the silencer to minimize additional pressure loss.

### LIST OF REFERENCE NUMERALS

- 10: power generating unit
- 11,11',11": gas turbine
- 12: air intake section
- 12',12": air intake duct
- 13: compressor
- 14,16: combustor
- 15,17: turbine
- 18: generator
- 19: generator cooling system
- 20,20a: generator cooling system
- 21: generator cooler
- 22: cooling water cooler
- 23: lube oil cooler
- 24: water pump
- 25, 25a,b: feed line
- 26, 26a,b: return line
- 27: bypass line
- 28: air circuit
- 29: oil circuit
- 30, 30a-c: air intake heat exchanger
- 31,34: return line
- 32,33: feed line
- 35: silencer
- 36: droplet catcher
- 37: evaporative cooler
- 38: filter
- 39: droplet injection device (fogging)
- CW: cooling water
- IA: intake air
- V1-V7: valve

## Claims

1. Power generating unit (10), comprising a gas turbine (11, 11', 11 ") with an air intake section (12, 12', 12"), a compressor (13), at least one combustor (14, 16) and at least one turbine (15, 17), and further comprising a gas-cooled generator (18), being driven by said gas turbine (11, 11', 11 ") and having a generator cooling system (20, 20a) comprising at least one cooler (21, 23), through which cooling water (CW) flows, and which removes heat from said generator, **characterized in that** said generator cooling system (20, 20a) is connected to an air intake heat exchanger (30, 30a-c) arranged within said air intake section (12, 12', 12") of said gas turbine (11, 11', 11 ") in order to transfer heat from said cooling water (CW) flowing through said generator cooling system (20, 20a), to the air flowing through said air intake section (12, 12', 12").

2. Power generating unit as claimed in claim 1, **characterized in that** said air intake section (12, 12', 12") of said gas turbine (11, 11', 11 ") comprises a filter (38) at the entrance of said air intake section (12, 12', 12"), and **in that** said air intake heat exchanger (30, 30a-c) is arranged downstream of said filter (38).

3. Power generating unit as claimed in claim 2, **characterized in that** said air intake section (12") of said gas turbine (11 ") comprises a silencer (35) downstream of said filter (38), and **in that** said air intake heat exchanger (30b) is arranged downstream of said silencer (35).

4. Power generating unit as claimed in claim 3, **characterized in that** said air intake section (12") of said gas turbine (11 ") comprises means (36, 37, 39) for cooling intake air (IA) flowing through said air intake section (12"), and **in that** said cooling means (36, 37, 39) is arranged between said filter (38) and said silencer (35).

5. Power generating unit as claimed in claim 4, **characterized in that** said cooling means (36, 37, 39) comprises a droplet injection device (39) for fogging.

6. Power generating unit as claimed in claim 4, **characterized in that** said cooling means (36, 37, 39) comprises an evaporative cooler (37), preferably with a droplet catcher (36) arranged downstream said evaporative cooler (37).

7. Power generating unit as claimed in claim 2, **characterized in that** said air intake section (12', 12") of said gas turbine (11', 11 ") comprises a silencer (35) downstream of said filter (38), **in that** said air intake section (12', 12") of said gas turbine (11', 11 ") further comprises means (36, 37, 39) for cooling intake air (IA) flowing through said air intake section (12', 12"), which cooling means (36, 37, 39) is arranged between said filter (38) and said silencer (35), and **in that** said air intake heat exchanger (30a,c) is arranged between said cooling means (36, 37, 39) and said silencer (35).

8. Power generating unit as claimed in claim 7, **characterized in that** said cooling means (36, 37, 39) comprises a droplet injection device (39) for fogging.

9. Power generating unit as claimed in claim 7, **characterized in that** said cooling means (36, 37, 39) comprises an evaporative cooler (37), preferably with a droplet catcher (36) arranged downstream said evaporative cooler (37).

10. Power generating unit as claimed in claim 1, **characterized in that** said generator cooling system (20, 20a-d) comprises a generator cooler (21) and a lube oil cooler (23), which are connected to a cooling water cooler (22), and **in that** connecting means (V1-V6, 31-34) are provided for selectively connecting said air intake heat exchanger (30, 30a-c) in series with said generator cooler (21) such that cold water flowing to the generator cooler (21) is further cooled by routing it through said intake heat exchanger (30, 30a-c), or in parallel to said cooling water cooler (22) in order to prevent icing of the compressor inlet and/or front stages of said gas turbine (11, 11', 11").

11. Power generating unit as claimed in claim 10, **characterized in that** a first valve (V3) is arranged in a feed line (25b) of said generator cooler (21), **in that** said air intake heat exchanger (30, 30a-c) is connected with a first feed line (32) to said feed line (25b) of said generator cooler (21) upstream of said first valve (V3), and with a first return line (31) to said feed line (25b) of said generator cooler (21) downstream of said first valve (V3), and **in that** a second and third valve (V1, V2) are arranged in said first feed line (32) and first return line (31).

12. Power generating unit as claimed in claim 11, **characterized in that** said air intake heat exchanger (30, 30a-c) is connected with a second feed line (33) to a common return line (26) of said generator cooler (21) and said lube oil cooler (23), and with a second return line (34) to a common feed line (25) of said generator cooler (21) and said lube oil cooler (23), and **in that** a fourth and fifth valve (V4, V5) are arranged in said second feed line (33) and second return line (34).

13. Power generating unit as claimed in claim 12, **characterized in that** a sixth valve (V6) is arranged in said common return line (26) or common feed line (25) between said air intake heat exchanger (30, 30a-c) and said cooling water cooler (22).

14. Method for operating a power generating unit according to claim 1, **characterized in that** heat is transferred from said generator cooling system (20, 20a) to intake air (IA) flowing through said air intake section (12, 12', 12") of said gas turbine (11, 11', 11 ") by means of said air intake heat exchanger (30, 30a-c).

15. Method according to claim 14, **characterized in that** said at least one cooler is a generator cooler (21), and **in that** cold water flowing to said generator cooler (21) is further cooled by routing it through said air intake heat exchanger (30, 30a-c) arranged within said air intake section (12, 12', 12") of said gas turbine (11, 11', 11 ") to inherently synchronize an additional cooling demand with a higher output of said gas turbine (11, 11', 11 ") when air inlet cooling is activated.

16. Method according to claim 14, **characterized in that** said air intake heat exchanger (30, 30a-c) is used at low ambient temperature to act as an efficient anti-icing means.

17. Method according to claim 14, **characterized in that** said air intake heat exchanger (30, 30a-c) is used for intake air pre-heating in order to control NOx emission of said gas turbine (11, 11', 11").
